# EUROPEAN PATENT APPLICATION

(11) **EP 4 541 560 A1**
(43) Date of publication of application: **23.04.2025**
(21) Application number: 23826954.2
(22) Date of filing: 02.06.2023
(51) Int. Cl.: B29C 64/314, B29C 64/118, B33Y 70/10, B33Y 80/00, C08K 7/22, C08L 101/00

(54) **RESIN MIXTURE FOR 3D-PRINTER MANUFACTURING, 3D-PRINTER MANUFACTURING MATERIAL, MANUFACTURED BODY, AND MANUFACTURING METHOD**

(30) Priority: 20.06.2022 JP 2022099107
(71) Applicant: Zeon Corporation, Tokyo 100-8246 (JP)
(72) Inventor: KATADA, Arinobu, Tokyo 100-8246 (JP)
(74) Representative: Kraus & Lederer PartGmbB
(86) International application number: PCT/JP2023/020683
(87) International publication number: WO 2023/248767

(57) **Abstract**

Provided is a resin mixture for 3D-printer modeling which has excellent modeling properties and can provide a 3D-printer modeling material allowing production of a lightweight modeled body. Provided is a resin mixture for 3D-printer modeling comprising a matrix resin and an organic cross-linked hollow particle.

## Description

### TECHNICAL FIELD

The present invention relates to a resin mixture for 3D-printer modeling, a 3D-printer modeling material, a modeled body, and a modeling method.

### BACKGROUND ART

Recently, 3D-printer modeling techniques (three-dimensional modeling techniques) have received attention as a method for producing a resin molded body. Such 3D-printer modeling techniques allow great freedom of design so that a variety of modeled bodies having complex three-dimensional geometries can be produced, and can also reduce time and costs needed for design. Thus, 3D-printer modeling techniques have been increasingly used in significantly broad applications.

For example, parts of mobile bodies such as drones often have complex three-dimensional geometries, and are produced by the 3D-printer modeling techniques in some cases. In production of such parts, the 3D-printer modeling material should have excellent modeling properties (which mean that complex three-dimensional geometries can be reproduced, and modeled bodies having sufficient strength are obtained). On the other hand, an improvement in driving time and a weight reduction of parts has been required for the mobile bodies such as drones.

For example, Patent Document 1 discloses a method for producing a three-dimensional modeled body, the method comprising a layer formation step of forming a layer using a composition for a three-dimensional modeling; and a binding solution application step of applying a binding solution containing a binder to a predetermined region of the layer, and repeatedly performing these steps in this order to produce the three-dimensional modeled body, wherein the three-dimensional modeled body is formed from a material containing a hollow particle having a first region and a second region which is a hollow portion surrounded by the first region, and a difference n1-n2 between a refractive index n1 of the material for the first region and a refractive index n2 of the material for the second region is 0.25 or greater.

### RELATED ART DOCUMENTS

### PATENT DOCUMENTS

Patent Document 1: JP 2016-010914 A

### SUMMARY OF THE INVENTION

### PROBLEM TO BE SOLVED BY THE INVENTION

However, the present inventor, who has conducted extensive research, has found a problem in Patent Document 1 that while the three-dimensional modeled body is formed from the material containing a hollow particle having a first region and a second region which is a hollow portion surrounded by the first region, a weight reduction effect derived from use of such a hollow particle is not demonstrated, depending on the method for 3D-printer modeling.

An object of the present invention is to provide a resin mixture for 3D-printer modeling which has excellent modeling properties and can provide a 3D-printer modeling material allowing production of a lightweight modeled body.

### MEANS FOR SOLVING PROBLEMS

The present inventor, who has conducted research to solve the above problems, has found that the above object can be achieved by using a matrix resin and an organic cross-linked hollow particle as a hollow particle, and thus has completed the present invention.

Specifically, the present invention provides a resin mixture for 3D-printer modeling as follows.
[1] A resin mixture for 3D-printer modeling, comprising a matrix resin and an organic cross-linked hollow particle.
[2] The resin mixture for 3D-printer modeling according to [1], wherein the organic cross-linked hollow particle has an apparent density of 0.2 to 0.9 g/cm³.
[3] The resin mixture for 3D-printer modeling according to [1] or [2], wherein the content of the organic cross-linked hollow particle is 1 to 70 parts by weight relative to 100 parts by weight of the total content of the matrix resin and the organic cross-linked hollow particle.
[4] The resin mixture for 3D-printer modeling according to any one of [1] to [3], wherein the organic cross-linked hollow particle includes a shell formed from a shell polymer containing a cross-linkable monomer unit.
[5] The resin mixture for 3D-printer modeling according to any one of [1] to [4], wherein the shell polymer contains a heteroatom-containing cross-linkable monomer unit as the cross-linkable monomer unit.
   The present invention also provides a 3D-printer modeling material, a modeled body, and a modeling method as follows.
[6] A 3D-printer modeling material comprising the resin mixture for 3D-printer modeling according to any one of [1] to [5].
[7] The 3D-printer modeling material according to [6] used in 3D-printer modeling by fused deposition modeling.
[8] The 3D-printer modeling material according to [6] or [7], wherein the 3D-printer modeling material is filament-shaped.
[9] A modeled body obtainable by 3D-printer modeling using the 3D-printer modeling material according to any one of [6] to [8].
[10] The modeled body according to [9] obtained by 3D-printer modeling by fused deposition modeling.
[11] A modeling method comprising performing 3D-printer modeling using the 3D-printer modeling material according to any one of [6] to [8].
[12] The modeling method according to [11] comprising performing 3D-printer modeling by fused deposition modeling.

### EFFECTS OF THE INVENTION

The present invention provides a resin mixture for 3D-printer modeling which has excellent modeling properties and can provide a 3D-printer modeling material allowing production of a lightweight modeled body.

### BRIEF DESCRIPTION OF DRAWINGS

### [Fig. 1]

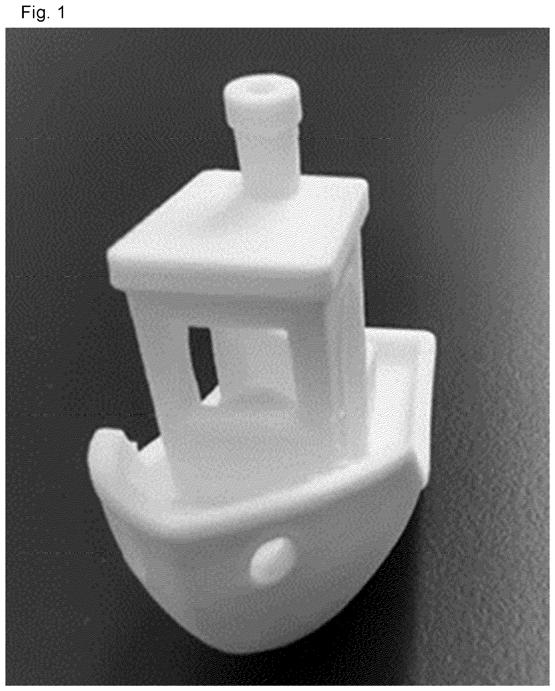

Fig. 1 is a photograph obtained in Example 1, in which the appearance of a modeled body having a shape of 3DBenchy is shown.

### DESCRIPTION OF EMBODIMENTS

### <Resin mixture for 3D-printer modeling>

The resin mixture for 3D-printer modeling according to the present invention comprises a matrix resin and an organic cross-linked hollow particle.

### [Matrix resin]

The resin mixture for 3D-printer modeling according to the present invention comprises a matrix resin.

The matrix resin can be any matrix resin as long as it can be used in 3D-printer modeling, and is not particularly limited. Usually, thermoplastic resins are used. Specific examples of the matrix resin include acrylonitrile-butadiene-styrene resins (ABS resins); acrylonitrile-styrene resins (AS resins); polylactic acid (PLA resin); polyolefin resins such as polypropylene and polyethylene; polyamide resins such as PA6, PA66, and PA12; polyimide resins such as polyimide, polyamideimide, and polyether imide; polycarbonate resins; polystyrene resins; fluorine-containing resins such as polyvinylidene fluoride and polytetrafluoroethylene; polyester resins; acrylic resins; polyvinyl chloride resins; polyether ketone ketone; poly(meth)acrylate; polyphenylene ether; polyphenylene sulfide; silicone resins, and the like. These matrix resins can be used alone or in combination.

Preferred matrix resins are acrylonitrile-butadiene-styrene resins (ABS resins) and polylactic acid (PLA resin) because these have small thermal shrinkage and easily provide a modeled body with high reproductivity of a print model. Polylactic acid (PLA resin) is preferred because it has smaller thermal shrinkage and more easily provides a modeled body with high reproductivity of a print model. On the other hand, acrylonitrile-butadiene-styrene resins (ABS resins) are more preferred because these have a low density and can further reduce the weight of a modeled body finally obtained.

### [Organic cross-linked hollow particle]

The resin mixture for 3D-printer modeling according to the present invention comprises an organic cross-linked hollow particle in addition to the above-mentioned matrix resin. The organic cross-linked hollow particle used in the present invention includes a shell formed from a shell polymer and a hollow portion.

The shell polymer is a polymer which has a three-dimensional cross-linked structure and is used to form a shell of the organic cross-linked hollow particle.

The shell polymer preferably contains a cross-linkable monomer unit. The cross-linkable monomer forming a cross-linkable monomer unit has two or more polymerizable functional groups and forms a cross-linking bond in the resin by a polymerization reaction. As the cross-linkable monomer, a compound having at least one ethylenically unsaturated bond as a polymerizable functional group is generally used.

Examples of the cross-linkable monomer forming a cross-linkable monomer unit include cross-linkable hydrocarbon monomers and heteroatom-containing cross-linkable monomers.

Examples of the cross-linkable hydrocarbon monomers include, but should not be limited to, bifunctional cross-linkable hydrocarbon monomers such as divinylbenzene, divinyl diphenyl, divinylnaphthalene, dicyclopentadiene, and ethylidene tetracyclododecene. Among these, divinylbenzene is preferred. Besides, cross-linkable hydrocarbon monomers composed of a polymer can also be used. Examples thereof include polybutadiene, polyisoprene, styrene-butadiene block copolymer (SBS), styrene-isoprene block copolymer (SIS), and the like.

Examples of the heteroatom-containing cross-linkable monomers include, but are not particularly limited to, bifunctional heteroatom-containing cross-linkable monomers such as diallyl phthalate, allyl (meth)acrylate [indicating allyl acrylate and/or allyl methacrylate. Hereinafter, the same is applied.], ethylene glycol di(meth)acrylate, and pentaerythritol di(meth)acrylate; tri- or higher functional heteroatom-containing cross-linkable monomers such as trimethylolpropane tri(meth)acrylate, ditrimethylolpropane tetra(meth)acrylate, pentaerythritol tri(meth)acrylate, pentaerythritol tetra(meth)acrylate, ethoxified pentaerythritol tetra(meth)acrylate, dipentaerythritol hexa(meth)acrylate, and dipentaerythritol poly(meth)acrylate; and the like.

Other examples of the heteroatom-containing cross-linkable monomers to be used include polyisocyanate compounds such as tolylene diisocyanate, xylylene diisocyanate, diphenylmethane diisocyanate, hexamethylene diisocyanate, trimethylhexamethylene diisocyanate, tetramethylxylylene diisocyanate, isophorone diisocyanate (IPDI), hydrogenated tolylene diisocyanate, hydrogenated xylylene diisocyanate, hydrogenated diphenylmethane diisocyanate, m-phenylene diisocyanate, biphenylene diisocyanate, tetramethylene diisocyanate, hexamethylene diisocyanate, and dimers or trimers thereof. Further, polyfunctional urethane (meth)acrylate compounds obtained by a reaction of a polyisocyanate compound with a hydroxyl group-containing (meth)acrylate having a hydroxyl group and an (meth)acryloyl group can also be used. Specific examples of hydroxyl group-containing (meth)acrylates include hydroxy alkyl (meth)acrylates such as 2-hydroxyethyl (meth)acrylate, 2-hydroxypropyl (meth)acrylate, 4-hydroxybutyl (meth)acrylate, pentaerythritol tri(meth)acrylate, trimethylolpropane di(meth)acrylate, and dipentaerythritol penta(meth)acrylate; and isocyanuric acid di(meth) acrylic acid esters, ethylene oxides thereof, and caprolactonemodified products thereof.

Among these, as the heteroatom-containing cross-linkable monomer, ethylene glycol di(meth) acrylate, trimethylolpropane tri(meth)acrylate, pentaerythritol tetra(meth)acrylate, dipentaerythritol poly (meth) acrylate, and pentaerythritol tri(meth)acrylate are preferred, ethylene glycol di(meth)acrylate, trimethylolpropane tri(meth)acrylate, and pentaerythritol tetra (meth) acrylate are more preferred, and ethylene glycol dimethacrylate, trimethylolpropane trimethacrylate, pentaerythritol tetraacrylate, and pentaerythritol tetramethacrylate are still more preferred.

As the cross-linkable monomer, the cross-linkable hydrocarbon monomers, ethylene glycol di(meth)acrylate, trimethylolpropane tri(meth)acrylate, pentaerythritol tetra (meth) acrylate, dipentaerythritol poly (meth) acrylate, and pentaerythritol tri(meth)acrylate are preferred, divinylbenzene, ethylene glycol di(meth)acrylate, trimethylolpropane tri(meth)acrylate, and pentaerythritol tetra (meth) acrylate are more preferred, and divinylbenzene, ethylene glycol dimethacrylate, trimethylolpropane trimethacrylate, pentaerythritol tetraacrylate, and pentaerythritol tetramethacrylate are still more preferred.

These cross-linkable monomers can be used alone or in combination. In the organic cross-linked hollow particle used in the present invention, the shell polymer preferably contains a bifunctional cross-linkable monomer unit and a tri- or higher functional cross-linkable monomer unit, more preferably contains a bifunctional cross-linkable monomer unit and a tri- or higher functional heteroatom-containing cross-linkable monomer unit, and still more preferably contains a bifunctional heteroatom-containing cross-linkable monomer unit and a tri- or higher functional heteroatom-containing cross-linkable monomer unit. Although the tri- or higher functional cross-linkable monomer is not particularly limited, tri- to hexafunctional cross-linkable monomers are preferred, tri- to pentafunctional cross-linkable monomers are more preferred, and tri- to tetrafunctional cross-linkable monomers are still more preferred. In the organic cross-linked hollow particle used in the present invention, the shell polymer can also contain a cross-linkable hydrocarbon monomer unit and a heteroatom-containing cross-linkable monomer unit.

The shell polymer may be composed of substantially only a cross-linkable monomer unit, or may contain a monofunctional monomer unit in addition to the cross-linkable monomer unit.

The monofunctional monomer forming a monofunctional monomer unit is a monomer having only one polymerizable functional group. A compound having an ethylenically unsaturated bond as the polymerizable functional group is generally used. Examples of the monofunctional monomer forming a monofunctional monomer unit include monofunctional hydrocarbon monomers and heteroatom-containing monofunctional monomers.

Examples of the monofunctional hydrocarbon monomers include, but are not particularly limited to, aromatic vinyl monomers such as styrene, ethylvinylbenzene, vinyltoluene, α-methylstyrene, p-methylstyrene, and halogenated styrene; monoolefin monomers such as ethylene, propylene, butylene, and 4-methyl-1-pentene; diene monomers such as butadiene and isoprene; and the like. Among these, styrene and ethylvinylbenzene are preferred.

Examples of the heteroatom-containing monofunctional monomers include, but are not particularly limited to, hydrophilic monofunctional monomers; acrylic monovinyl monomers such as methyl (meth)acrylate, ethyl (meth)acrylate, butyl (meth)acrylate, 2-ethylhexyl (meth)acrylate, lauryl (meth)acrylate, and glycidyl (meth)acrylate; carboxylic acid vinyl ester monomers such as vinyl acetate; vinyl halide monomers such as vinyl chloride; vinylidene halide monomers such as vinylidene chloride; vinylpyridine monomers; urethane (meth)acrylate and allyl glycidyl ether; and the like.

The hydrophilic monofunctional monomers preferably have solubility in water of 1% by mass or more. Examples of such hydrophilic monofunctional monomers include, but are not particularly limited to, monofunctional monomers having a hydrophilic group, such as acid group-containing monomers, hydroxyl group-containing monomers, amide group-containing monomers, and polyoxyethylene group-containing monomers.

The acid group-containing monomer indicates a monomer containing an acid group. The acid group herein includes both of proton donating groups (Bronsted acid groups) and electron-pair receiving groups (Lewis acid groups). The acid group-containing monomer is not particularly limited as long as it has an acid group. Examples thereof include carboxyl group-containing monomers, sulfonic acid group-containing monomers, and the like. Examples of the carboxyl group-containing monomers include ethylenically unsaturated carboxylic acid monomers such as acrylic acid, methacrylic acid, crotonic acid, cinnamic acid, itaconic acid, fumaric acid, maleic acid, and butene tricarboxylic acid; monoalkyl esters of unsaturated dicarboxylic acids such as monoethyl itaconate, monobutyl fumarate, and monobutyl maleate; and the like. Examples of the sulfonic acid group-containing monomers include styrenesulfonic acid and the like.

Examples of the hydroxyl group-containing monomers include 2-hydroxyethyl (meth)acrylate, 2-hydroxypropyl (meth)acrylate, 4-hydroxybutyl (meth)acrylate, and the like.

Examples of the amide group-containing monomers include acrylamide, dimethylacrylamide, and the like.

Examples of the polyoxyethylene group-containing monomers include methoxypolyethylene glycol (meth)acrylate and the like.

These monofunctional monomer units can be used alone or in combination.

The proportion of the cross-linkable monomer unit in the shell polymer is preferably 20 to 100% by mass, more preferably 40 to 100% by mass, still more preferably 60 to 100% by mass, particularly preferably 80 to 100% by mass, but not particularly limited thereto. When the proportion of the cross-linkable monomer falls within the above ranges, a covalent bond network is densely formed in the shell, and generation of communication holes of the shell and shell defects are suppressed. As a result, a 3D-printer modeling material having excellent modeling properties is obtained, and can provide a modeled body having a lighter weight.

The proportion of the monofunctional monomer unit in the shell polymer is preferably 0 to 80% by mass, more preferably 0 to 60% by mass, still more preferably 0 to 40% by mass, particularly preferably 0 to 20% by mass, but not particularly limited.

The shell polymer may contain a heteroatom-containing monomer unit. Examples of the heteroatom-containing monomer forming a heteroatom-containing monomer unit include heteroatom-containing cross-linkable monomers and heteroatom-containing monofunctional monomers. The proportion of the heteroatom-containing monomer unit in the shell polymer is preferably 1 to 99% by mass, more preferably 5 to 95% by mass, still more preferably 10 to 90% by mass, but not particularly limited.

The shell polymer is not limited to those described above as long as it has a three-dimensional cross-linked structure and can form a shell for the organic cross-linked hollow particle. For example, the shell polymer may be phenol resin, melamine resin, urea resin, unsaturated polyester resin, epoxy resin, polyurethane resin, silicon resin, alkyd resin, thermally curable modified polyphenylene ether resin, thermally curable polyimide resin, benzoxazine resin, urea resin, allyl resin, aniline resin, maleimide resin, bismaleimide triazine resin, liquid crystalline polyester resin, vinyl ester resin, unsaturated polyester resin, cyanate ester resin, polyether imide resin, or the like.

The organic cross-linked hollow particle used in the present invention is a particle comprising a shell (outer shell) containing the above-mentioned shell polymer and a hollow portion surrounded by the shell. In the present invention, the hollow portion is a hollow space clearly distinguished from the shell of the organic cross-linked hollow particle formed from the resin. Although the organic cross-linked hollow particle used in the present invention may have one or two or more hollow portions, to maintain a favorable balance between a high void ratio and mechanical strength, preferably, the organic cross-linked hollow particle used in the present invention has only one hollow portion.

In the organic cross-linked hollow particle used in the present invention, usually, the shell does not have communication holes of the shell and shell defects, and the hollow portion is isolated from the outside of the particle by the shell. However, the shell may have one or two or more communication holes, and the hollow portion may be in communication with the outside of the particle through the communication hole(s). The shell of the organic cross-linked hollow particle and a partition dividing adjacent hollow portions, when two or more hollow portions are present, may be porous. In this case, the hollow portion(s) has (have) a size large enough to be clearly distinguished from a large number of fine spaces homogeneously dispersed inside the porous structure.

The hollow portion of the organic cross-linked hollow particle used in the present invention may be filled with a gas such as air, or may contain a solvent.

The organic cross-linked hollow particle used in the present invention can have any shape as long as the hollow portion is formed inside the particle. The organic cross-linked hollow particle can have any outer shape, and preferably has a spherical shape due to ease of production.

The outer shape of the organic cross-linked hollow particle can be verified by observing the particle with an SEM or a TEM. The inner shape of the organic cross-linked hollow particle can be verified by SEM observation of a cross-section of the particle or TEM observation of the particle.

The true density of the organic cross-linked hollow particle used in the present invention is preferably 0.95 to 1.4 g/cm³, more preferably 1.0 to 1.3 g/cm³, but not particularly limited thereto. The true density of the organic cross-linked hollow particle indicates the density of only the shell portion of the organic cross-linked hollow particle. The true density of the organic cross-linked hollow particle can be controlled by adjusting the monomer composition of the shell polymer.

The organic cross-linked hollow particle used in the present invention has an apparent density of preferably 0.2 to 0.9 g/cm³, more preferably 0.25 to 0.8 g/cm³. From the viewpoint of obtaining a modeled body having a lighter weight, the apparent density of the organic cross-linked hollow particle is more preferably 0.25 to 0.7 g/cm³, particularly preferably 0.25 to 0.6 g/cm³, most preferably 0.25 to 0.5 g/cm³. On the other hand, from the viewpoint of further improving the modeling properties of a 3D-printer modeling material to be obtained and enhancing the mechanical strength of a modeled body to be obtained, the apparent density of the organic cross-linked hollow particle is more preferably 0.3 to 0.8 g/cm³, particularly preferably 0.35 to 0.8 g/cm³, most preferably 0.4 to 0.8 g/cm³.

The apparent density of the organic cross-linked hollow particle indicates the density of the entire organic cross-linked hollow particle including the shell portion and the hollow portion of the organic cross-linked hollow particle. The apparent density of the organic cross-linked hollow particle can be controlled by adjusting the monomer composition of the shell polymer, types and amounts of a dispersion stabilizer and a hydrophobic organic solvent used in production of the organic cross-linked hollow particle by suspension polymerization, and the suspension conditions therein, and the like.

Specifically, the true density of the organic cross-linked hollow particle is measured by the following method. After the organic cross-linked hollow particles are preliminarily ground, about 10 g of ground pieces of the organic cross-linked hollow particles are charged into a volumetric flask having a volume of 100 cm³, and the mass of the charged ground pieces is precisely weighed. In the next step, isopropanol is added to a volumetric flask as in the measurement of the apparent density above, and the mass of isopropanol is precisely weighed. Then, the true density (g/cm³) of the organic cross-linked hollow particle is calculated based on Expression (I) below: true density (g/cm3) of organic cross-linked hollow particle = [mass of ground pieces of organic cross-linked hollow particles] ÷ (100 - [mass of isopropanol] ÷ [density of isopropanol at measurement temperature])

The apparent density D₁ of the organic cross-linked hollow particle is measured by the following method. Initially, about 30 cm³ of the organic cross-linked hollow particle is charged into a volumetric flask having a volume of 100 cm³, and the mass of the charged organic cross-linked hollow particle is precisely weighed. Next, isopropanol is added to the volumetric flask containing the organic cross-linked hollow particle up to the exact gauge line, carefully to avoid inclusion of air bubbles. The mass of isopropanol added to the volumetric flask is precisely weighed, and the apparent density D₁ (g/cm³) of the organic cross-linked hollow particle is calculated based on Expression (II) below: apparent density D1 (g/cm3) of organic cross-linked hollow particle = [mass of organic cross-linked hollow particle] ÷ (100 - [mass of isopropanol] ÷ [density of isopropanol at measurement temperature])

The volume average particle size (Dv) of the organic cross-linked hollow particle used in the present invention is preferably 1 to 50 µm, more preferably 1.5 to 40 µm, still more preferably 2 to 30 µm, but not particularly limited thereto. The particle size distribution (Dv/Dn) (volume average particle size (Dv)/number average particle diameter (Dn) of the organic cross-linked hollow particle used in the present invention is preferably 1.02 to 2.00, more preferably 1.04 to 1.60, but not particularly limited thereto.

The volume average particle size (Dv) and particle size distribution (Dv/Dn) of the organic cross-linked hollow particle can be controlled by adjusting the monomer composition of the shell polymer, the type and amount of the dispersion stabilizer used in production of the organic cross-linked hollow particle by suspension polymerization, and the suspension conditions therein.

The volume average particle size (Dv) and number average particle diameter (Dn) of the organic cross-linked hollow particle can be determined as follows: for example, the particle sizes of the organic cross-linked hollow particles are measured by a laser diffraction-type particle size distribution analyzer, the number average thereof and the volume average thereof are calculated, respectively, and the obtained values are defined as the number average particle diameter (Dn) and the volume average particle size (Dv) of the of the particles. The particle size distribution (Dv/Dn) is the value obtained by dividing the volume average particle size (Dv) by the number average particle diameter (Dn).

The thermal decomposition starting temperature of the organic cross-linked hollow particle used in the present invention is preferably 210 to 400°C, more preferably 220 to 350°C. When the thermal decomposition starting temperature falls within the above ranges, the modeling properties of the 3D-printer modeling material to be obtained can be further improved, and the mechanical strength of the modeled body to be obtained can be enhanced. The thermal decomposition starting temperature of the organic cross-linked hollow particle is the temperature at which the weight reduces by 5%. The thermal decomposition starting temperature of the organic cross-linked hollow particle can be measured with a TG-DTA apparatus under an air atmosphere at an air flow rate of 230 mL/min and a heating rate of 10°C/min.

Although not particularly limited, the content of the organic cross-linked hollow particle is preferably 1 to 70 parts by weight, more preferably 2 to 60 parts by weight, still more preferably 5 to 55 parts by weight relative to 100 parts by weight of the total content of the matrix resin and the organic cross-linked hollow particle. From the viewpoint of obtaining a modeled body having a lighter weight, the content of the organic cross-linked hollow particle can be 10 parts by weight or more, can be 20 parts by weight or more, and can be 30 parts by weight or more relative to 100 parts by weight of the total content of the matrix resin and the organic cross-linked hollow particle. On the other hand, from the viewpoint of further improving the modeling properties of a 3D-printer modeling material to be obtained and enhancing the mechanical strength of a modeled body to be obtained, the content of the organic cross-linked hollow particle can be 50 parts by weight or less, can be 40 parts by weight or less, and can be 35 parts by weight or less relative to 100 parts by weight of the total content of the matrix resin and the organic cross-linked hollow particle.

In 3D-printer modeling, in some cases, accompanied by movement of the nozzle which ejects the 3D-printer modeling material, so-called stringiness may occur in which the 3D-printer modeling material is stretched to form fine fibers. Such stringiness is unlikely to occur in use of a 3D-printer modeling material comprising a resin mixture for 3D-printer modeling containing a small amount of the organic cross-linked hollow particle. For this reason, when occurrence of stringiness needs to be suppressed, the content of the organic cross-linked hollow particle is preferably 50 parts by weight or less, more preferably 40 parts by weight or less, still more preferably 35 parts by weight or less relative to 100 parts by weight of the total content of the matrix resin and the organic cross-linked hollow particle.

### [Method of producing organic cross-linked hollow particle]

The organic cross-linked hollow particle used in the present invention can be suitably produced by the following production method comprising (A) a mixed solution preparation step, (B) a suspension step, (C) a polymerization step, and (D) a solvent removal step.

Specifically, the organic cross-linked hollow particle used in the present invention can be suitably produced by the production method comprising:
(A) a mixed solution preparation step of preparing a mixed solution containing polymerizable monomers containing a cross-linkable monomer, a hydrophobic organic solvent, a polymerization initiator, and an aqueous medium;
(B) a suspension step of suspending the mixed solution obtained in the mixed solution preparation step, thereby preparing a suspension in which droplets of the polymerizable monomer composition containing the polymerizable monomers, the hydrophobic organic solvent, and the polymerization initiator are dispersed in the aqueous medium;
(C) a polymerization step of subjecting the suspension obtained in the suspension step to a polymerization reaction, thereby preparing a precursor composition containing precursor particles having hollow portions and the hydrophobic organic solvent encapsulated in the hollow portions; and
(D) a solvent removal step of removing the hydrophobic organic solvent encapsulated in the precursor particles obtained in the polymerization step.

### (A) Mixed solution preparation step

The mixed solution preparation step is a step of preparing a mixed solution containing polymerizable monomers containing a cross-linkable monomer, a hydrophobic organic solvent, a polymerization initiator, and an aqueous medium. The organic cross-linked hollow particle used in the present invention is preferably produced by the production method comprising such a step.

### (Polymerizable monomers)

The polymerizable monomers to be used are the above-mentioned cross-linkable monomer, and optionally the above-mentioned monofunctional monomer. The monomer composition of the polymerizable monomers can be any monomer composition as long as the monomer composition of the target shell polymer can be obtained.

The content of the polymerizable monomers (the total amount of the cross-linkable monomer and the monofunctional monomer) in the mixed solution prepared in the mixed solution preparation step is not particularly limited, but from the viewpoint of the balance between the particle size and the mechanical strength, the content is preferably 15 to 55 mass%, more preferably 25 to 50 mass% relative to 100 mass% of the total mass of the components in the mixed solution excluding the aqueous medium.

### (Hydrophobic organic solvent)

As the hydrophobic organic solvent, a non-polymerizable and poorly water-soluble organic solvent is used. The hydrophobic organic solvent acts as a spacer material which forms (a) hollow portion(s) inside the particle.

Although the hydrophobic organic solvent is not particularly limited, hydrocarbon solvents can be suitably used. Specific examples thereof include solvents having relatively high volatility, such as saturated hydrocarbon solvents such as butane, pentane, normal hexane, cyclohexane, heptane, and octane; aromatic hydrocarbon solvents such as benzene, toluene, and xylene; carbon disulfide, carbon tetrachloride, and the like.

The content of the hydrophobic organic solvent in the mixed solution is preferably 50 to 500 parts by mass, more preferably 60 to 400 parts by mass, still more preferably 80 to 350 parts by mass, particularly preferably 100 to 300 parts by mass relative to 100 parts by mass of the total mass of the polymerizable monomers.

### (Polymerization initiator)

As the polymerization initiator, use of an oil-soluble polymerization initiator is preferred. By using the oil-soluble polymerization initiator as the polymerization initiator, the polymerization initiator can be suitably taken into droplets of the polymerizable monomer composition in a suspension to be prepared in the suspension step described later.

The oil-soluble polymerization initiator is not particularly limited as long as it has a solubility in water of 0.2 mass% or less and is lipophilic. Examples of the oil-soluble polymerization initiator include benzoyl peroxide, lauroyl peroxide, t-butylperoxide 2-ethylhexanoate, t-butyl peroxydiethylacetate, t-butyl peroxypivalate, 2,2'-azobis(2,4-dimethylvaleronitrile), azobisisobutyronitrile, and the like.

The content of the polymerization initiator is preferably 0.1 to 10 parts by mass, more preferably 0.2 to 5 parts by mass, still more preferably 0.5 to 3 parts by mass relative to 100 parts by mass of the total mass of the polymerizable monomers in the mixed solution. By controlling the content of the polymerization initiator within these ranges above, the polymerization reaction is caused to sufficiently progress, it is less likely that the polymerization initiator may remain after the end of the polymerization reaction, and it is less likely that unexpected side reactions may progress.

### (Aqueous medium)

Examples of aqueous media include media selected from the group consisting of water, hydrophilic solvents, and mixtures of water and hydrophilic solvents.

The hydrophilic solvent is not particularly limited as long as it is sufficiently mixed with water and does not cause phase separation, and examples thereof include alcohols such as methanol and ethanol; tetrahydrofuran (THF); dimethyl sulfoxide (DMSO); and the like.

Among these aqueous media, use of water is preferred due to the level of the polarity. When a mixture of water and a hydrophilic solvent is used, to appropriately form droplets of the polymerizable monomer composition containing the polymerizable monomers, the hydrophobic organic solvent, and the polymerization initiator, preferably, the entire mixture does not have an excessively reduced polarity. When a mixture of water and a hydrophilic solvent is used, the mixing ratio (mass ratio) of water to the hydrophilic solvent is preferably 99:1 to 50:50.

In the mixed solution preparation step, a dispersion stabilizer is preferably used in addition of the polymerizable monomers, the hydrophobic organic solvent, the polymerization initiator, and the aqueous medium. In other words, the mixed solution preparation step is preferably a step of preparing a mixed solution containing the polymerizable monomers, the hydrophobic organic solvent, the polymerization initiator, the aqueous medium, and the dispersion stabilizer.

The dispersion stabilizer is a compound which causes droplets of the polymerizable monomer composition to be dispersed in the aqueous medium in the suspension step described later, and may be either an inorganic dispersion stabilizer or an organic dispersion stabilizer.

Examples of inorganic dispersion stabilizers include colloidal silica, magnesium hydroxide, calcium phosphate, calcium carbonate, barium sulfate, calcium oxalate, calcium carbonate, magnesium carbonate, barium carbonate, tricalcium phosphate, aluminum hydroxide, magnesium hydroxide, ferric hydroxide, hydroxy apatite, silicic acid diatomite, clay, bentonite, and the like.

Examples of organic dispersion stabilizers include methylcellulose, hydroxypropylmethylcellulose, carboxymethylcellulose, starch, and the like.

Among these, inorganic dispersion stabilizers are preferred from the viewpoint of a high effect of stabilizing dispersion and ease in control of the particle diameter of droplets of the polymerizable monomer composition containing the polymerizable monomers, the hydrophobic organic solvent, and the polymerization initiator. Among these inorganic dispersion stabilizers, metal-containing dispersion stabilizers are preferred, and poorly water-soluble inorganic metal salts are more preferred. The poorly water-soluble inorganic metal salts are preferably inorganic metal salts having a solubility in 100 g of water of 0.5 g or less, and examples thereof include magnesium hydroxide, calcium hydroxide, barium hydroxide, calcium phosphate, and the like. Among these, magnesium hydroxide is more preferred. These dispersion stabilizers can be used alone or in combination.

To further enhance the effect of stabilizing dispersion, the dispersion stabilizer is preferably used in the form of a dispersion or a solution of the dispersion stabilizer by dispersing or dissolving the dispersion stabilizer in an aqueous medium. In other words, in the mixed solution preparation step, the mixed solution is preferably obtained by mixing the polymerizable monomers, the hydrophobic organic solvent, and the polymerization initiator with the dispersion stabilizer in the form of a dispersion or a solution. The aqueous medium to be used can be those listed above.

For the mixing ratio of the dispersion stabilizer in the form of a dispersion or a solution thereof to the aqueous medium, the mass ratio of "dispersion stabilizer:aqueous medium" is preferably 0.7:100 to 7:100, more preferably 1.0:100 to 4.0:100, still more preferably 1.4:100 to 3:100. When the mixing ratio of the dispersion stabilizer to the aqueous medium falls within these ranges above, the effect of stabilizing dispersion can be more appropriately enhanced.

As the method of preparing a dispersion or a solution of the dispersion stabilizer, a method of directly mixing the dispersion stabilizer with the aqueous medium may be used. Preferred is a method of reacting two or more compounds as precursors of the dispersion stabilizer (i.e., two or more precursor compounds) by mixing these in an aqueous medium, thereby generating the dispersion stabilizer.

When the two or more precursor compounds are mixed with the aqueous medium, any precursor compound can be used without limitation. For example, when a poorly water-soluble hydroxide salt such as magnesium hydroxide, calcium hydroxide, or barium hydroxide is used as the dispersion stabilizer, examples of the two or more precursor compounds include a combination of a water-soluble polyvalent metal salt and an alkali metal hydroxide, and the like.

Examples of the water-soluble polyvalent metal salt include hydrochloric acid salts, sulfuric acid salts, nitric acid salts, and acetic acid salts of polyvalent metals such as magnesium, calcium, aluminum, iron, copper, manganese, nickel, and tin, and the like. Among these, water-soluble salts of magnesium and calcium are preferred. Examples of alkali metal hydroxides include sodium hydroxide, potassium hydroxide, lithium hydroxide, and the like. For example, when magnesium hydroxide is used as the dispersion stabilizer, two or more precursor compounds are suitably a combination of magnesium chloride and sodium hydroxide.

The two or more precursor compounds can be mixed in the aqueous medium by any method. When the two or more precursor compounds are a combination of a water-soluble polyvalent metal salt and an alkali metal hydroxide, a method of adding an aqueous medium solution of the alkali metal hydroxide dropwise to an aqueous medium solution of the water-soluble polyvalent metal salt with stirring is suitable.

In the aqueous medium solution of the water-soluble polyvalent metal salt, the content of the water-soluble polyvalent metal salt is preferably 2 to 8 parts by weight, more preferably 3 to 6 parts by weight relative to 100 parts by weight of the aqueous medium solution. In the aqueous medium solution of the alkali metal hydroxide, the content of the alkali metal hydroxide is preferably 6 to 20 parts by weight, more preferably 8 to 18 parts by weight relative to 100 parts by weight of the aqueous medium solution. The aqueous medium to be used can be those listed above.

In the mixed solution preparation step, the mixed solution can be obtained by mixing the above-mentioned components by stirring or the like. At this time, other materials may be optionally added in addition to the above-mentioned components. In the mixed solution preparation step, a mixed solution is prepared, in which an oil phase containing lipophilic materials such as the polymerizable monomers, the hydrophobic organic solvent, and the polymerization initiator is dispersed into a particle size of about several millimeters in an aqueous phase containing the aqueous medium and the dispersion stabilizer optionally used. The dispersion state of these components in the mixed solution can also be observed by the naked eye depending on the types of the components.

In the mixed solution preparation step, to readily obtain a homogenous composition of the shell portion, the mixed solution is preferably prepared by preliminarily preparing an oil phase containing the polymerizable monomers, the hydrophobic organic solvent, and the polymerization initiator, and mixing the oil phase with a dispersion or solution prepared by dispersing or dissolving the dispersion stabilizer in the aqueous medium.

### (B) Suspension step

The suspension step is a step of suspending the mixed solution obtained in the mixed solution preparation step described above, thereby preparing a suspension in which droplets of the polymerizable monomer composition containing the polymerizable monomers, the hydrophobic organic solvent, and the polymerization initiator are dispersed in the aqueous medium.

The suspension method for forming droplets of the polymerizable monomer composition is not particularly limited. Preferred is a method of stirring the mixed solution obtained in the mixed solution preparation step with a stirrer enabling strong stirring.

In the suspension step, a suspension in which droplets of the polymerizable monomer composition containing the lipophilic materials above are homogeneously dispersed in the aqueous medium can be obtained. Such droplets of the polymerizable monomer composition are difficult to observe with the naked eye, and can be observed with a known observation apparatus such as an optical microscope, for example. In the suspension step, phase separation occurs in the droplets of the polymerizable monomer composition, and thus a hydrophobic organic solvent having a low polarity is likely to concentrate on the insides of the droplets. As a result, in the obtained droplets, the hydrophobic organic solvent is distributed in the inside of each droplet and other materials other than the hydrophobic organic solvent are distributed in the periphery thereof.

### (C) Polymerization step

The polymerization step is a step of subjecting the suspension prepared in the suspension step described above to a polymerization reaction, thereby preparing a precursor composition containing precursor particles having hollow portions and containing the hydrophobic organic solvent encapsulated in the hollow portions.

In the polymerization step, the polymerizable monomers in the droplets are polymerized in the state where the hydrophobic organic solvent is encapsulated in the droplets of the polymerizable monomer composition. Thereby, precursor particles each having a shell containing a resin as the polymerized product of the polymerizable monomers and a hollow portion filled with the hydrophobic organic solvent are formed.

In the polymerization step, the droplets of the polymerizable monomer composition are subjected to a polymerization reaction in the state where the hydrophobic organic solvent is encapsulated in the droplets. Thereby, the polymerization reaction is likely to progress while the shape of the droplets is maintained, and the size and void ratio of the precursor particles are readily controlled. Since the polymerizable monomers are used in combination with the hydrophobic organic solvent, the hydrophobic organic solvent has a low polarity to the shell of the precursor particles, and thus is less compatible with the shell. Thus, it is likely that phase separation sufficiently occurs and only one hollow portion is formed in the shell.

The polymerization method is not particularly limited, and for example, a batch-wise (batch) method, a semi-continuous method, a continuous method, or the like can be used. The polymerization temperature is preferably 40 to 90°C, more preferably 50 to 80°C. The reaction time for polymerization is preferably 1 to 48 hours, more preferably 3 to 24 hours.

Through the polymerization step, a precursor composition is obtained, in which precursor particles encapsulating the hydrophobic solvent are dispersed in an aqueous phase containing the aqueous medium as the main component.

### (D) Solvent removal step

The solvent removal step is a step of removing the hydrophobic organic solvent encapsulated in the precursor particles obtained in the polymerization step.

Preferably, prior to solvent removal in the solvent removal step, the precursor composition obtained in the polymerization step is preliminarily subjected to solid liquid separation, thereby obtaining solid contents containing the precursor particles encapsulating the hydrophobic organic solvent. After the solid contents containing the precursor particles are obtained by the solid liquid separation, the hydrophobic organic solvent encapsulated in the precursor particles is removed in the air. Thereby, the hydrophobic organic solvent inside the precursor particles is replaced by air, and organic cross-linked hollow particles filled with a gas can be obtained.

The method for subjecting the precursor composition to solid liquid separation is not particularly limited, and a known method can be used. Examples of the solid liquid separation method include centrifugation, filtration, static separation, and the like. Among these, centrifugation or filtration can be used. From the viewpoint of ease in operation, centrifugation may be used. After the solid liquid separation is performed, an optional step such as a preparative drying step may be further used. Examples of the preparative drying step include a step of preparatively drying the solid contents obtained after the solid liquid separation step with a drying apparatus such as a dryer or a drying tool such as a hand dryer.

The expression "in the air" in the solvent removal step strictly indicates under an environment in which no liquid content is present on the outsides of the precursor particles and under an environment in which only a trace of liquid content in an amount not affecting the removal of the hydrophobic organic solvent is present on the outsides of the precursor particles. It can also be said that the expression "in the air" is a state where no precursor particles are present in the slurry or a state where the precursor particles are present in the dry powder. In other words, in the solvent removal step, it is desired that the hydrophobic organic solvent is removed under an environment in which the precursor particles are directly in contact with an external gas.

The method of removing the hydrophobic organic solvent in the precursor particles is not particularly limited, and a known method can be used. Examples thereof include drying under reduced pressure, drying with heating, and pneumatic conveying drying. These methods may be used in combination. In particular, when drying with heating is used, the heating temperature needs to be set at a temperature equal to or higher than the boiling point of the hydrophobic organic solvent and equal to or lower than the highest temperature at which the shell structures of the precursor particles do not collapse. Accordingly, although it depends on the composition of the shell in the precursor particles and the type of the hydrophobic organic solvent, the heating temperature is preferably 50 to 200°C, more preferably 70 to 200°C, still more preferably 100 to 200°C. By the drying operation in the air, the hydrophobic organic solvent inside the precursor particles is replaced by an external gas, and as a result, organic cross-linked hollow particles having hollow portions filled with the gas are obtained.

The drying atmosphere is not particularly limited, and can be appropriately selected according to the application of the organic cross-linked hollow particle. The drying atmosphere to be considered is air, oxygen, nitrogen, argon, or the like. By filling the organic cross-linked hollow particles with a gas once and then drying the hollow particles under reduced pressure, organic cross-linked hollow particles whose insides are temporarily in vacuum are also obtained.

Alternatively, the hydrophobic organic solvent may be removed as follows: the slurry-like precursor composition obtained in the polymerization step is not subjected to the solid liquid separation, and the hydrophobic organic solvent encapsulated in the precursor particles is replaced by the aqueous medium of the slurry in the slurry containing the precursor particles and the aqueous medium.

In comparison of these methods, i.e., between the method of obtaining organic cross-linked hollow particles having hollow portions filled with a gas by subjecting the slurry-like precursor composition to solid liquid separation and then removing the hydrophobic organic solvent in the precursor particles in the air and the method of obtaining organic cross-linked hollow particles having hollow portions filled with a gas by replacing the hydrophobic organic solvent encapsulated in the precursor particles by the aqueous medium of the slurry in the slurry containing the precursor particles and the aqueous medium, then subjecting the slurry to solid liquid separation, and then removing the aqueous medium in the precursor particles in the air, the former method is advantageous in that the organic cross-linked hollow particles are difficult to crush in the step of removing the hydrophobic organic solvent, while the latter method is advantageous in that the amount of residual hydrophobic organic solvent is reduced by bubbling using an inert gas.

In addition, the following methods may be used as the method of removing the hydrophobic organic solvent encapsulated in the precursor particles after the polymerization step and before the solid liquid separation step without subjecting the slurry-like precursor composition obtained in the polymerization step to solid liquid separation: for example, a method of evaporating and distilling off the hydrophobic organic solvent encapsulated in the precursor particles from the precursor composition under a predetermined pressure (under high pressure, under normal pressure, or under reduced pressure); or a method of introducing an inert gas such as nitrogen, argon, or helium or a water vapor into the precursor composition under predetermined pressure (under high pressure, under normal pressure, or under reduced pressure), and evaporating and distilling off the hydrophobic organic solvent.

### (E) Other steps

The production method may comprise other steps. Examples of the other steps include (E-1) a washing step and/or (E-2) another hollow portion replacement step.

### (E-1) Washing step

The production method preferably comprises a washing step before or after the recovery step. For example, when the dispersion stabilizer is used, preferably, the production method comprises a washing step before the recovery step, the washing step involving performing washing by adding an acid or an alkali to remove the residual dispersion stabilizer in the organic cross-linked hollow particle slurry containing the organic cross-linked hollow particles and the aqueous medium. When the dispersion stabilizer used is a dispersion stabilizer soluble to an acid, preferably, the acid is added to the precursor composition containing the precursor particles, and washing is performed. In contrast, when the dispersion stabilizer used is a dispersion stabilizer soluble to an alkali, preferably, the alkali is added to the precursor composition containing the precursor particles, and washing is performed.

When the dispersion stabilizer soluble to an acid is used as the dispersion stabilizer, it is preferred that the acid be added to the precursor composition containing the precursor particles, and the pH be adjusted to preferably 6.5 or less, more preferably 6 or less. As the acid to be added, an inorganic acid such as sulfuric acid, hydrochloric acid, or nitric acid or an organic acid such as formic acid or acetic acid can be used. In particular, sulfuric acid is suitable because of its high efficiency in removal of the dispersion stabilizer and a light load over the production facility.

### (E-2) Another hollow portion replacement step

Another hollow portion replacement step is a step of replacing a gas or a liquid inside the organic cross-linked hollow particles by another gas or liquid. By such a replacement, the environment inside the organic cross-linked hollow particles can be changed, a molecule can be selectively sealed inside the organic cross-linked hollow particles, or the chemical structure inside the organic cross-linked hollow particles can be modified according to the application.

### [Other compounding agents]

The resin mixture for 3D-printer modeling according to the present invention may be composed only of the matrix resin and the organic cross-linked hollow particle, or may contain other compounding agents other than these in the range not impairing the object of the present invention. Preferably, the resin mixture for 3D-printer modeling according to the present invention contains substantially no hollow particles other than the organic cross-linked hollow particle (the content of hollow particles other than the organic cross-linked hollow particle is preferably less than 1% by weight).

As other compounding agents, the resin mixture for 3D-printer modeling according to the present invention can contain additives such as fillers including organic fillers and inorganic fillers, colorants including dyes and pigments, an antistatic agent, a terminal capping agent, an ultraviolet absorbing agent, an ultraviolet light preventer, a heat stabilizer, a photostabilizer, an anti-fogging agent, an anti-mist agent, a plasticizer, a flame retardant, a coloring preventer, a die drool preventer, an antioxidant, a mold release agent (erucamide, stearamide, oleamide, ethylenebisstearamide, ethylenebisoleamide, ethylenebislauramide), a moisture preventer, an oxygen barrier agent, a nucleator, and a compatibilizer. These compounding agents may be used alone or in combination.

Examples of organic fillers include fibrous organic fillers such as aramid fibers, polyimide fibers, polybenzothiazole fibers, and polyethylene fibers; fibers derived from plants such as hemp and bamboo; and the like.

Examples of inorganic fillers include glass beads, glass fibers, flat cross-sectional glass fibers, glass milled fibers, ceramic beads, wollastonite, mica, synthetic mica, sericite, talc, clay, zeolite, bentonite, kaolinite, dolomite, silica, zeolite, feldspar powder, potassium titanate, fine powdery silicic acid, calcium carbonate, magnesium carbonate, barium sulfate, aluminum oxide, magnesium oxide, calcium oxide, titanium oxide, silicon oxide, aluminum silicate, zirconium silicate, gypsum, novaculite, dawsonite, montmorillonite, calcium sulfide, zinc oxide, boron nitride, glass flakes, metal flakes, metal fibers, basalt fibers, rock wool, ceramic fibers, slag potassium titanate, boron whisker, aluminum borate, xonotlite, palygorskite (attapulgite), sepiolite, and the like. Examples of the inorganic fillers also include carbon-based fillers, such as carbon fibers such as fibers, carbon milled fibers, and carbon nanotube; carbon black; graphite; and carbon flake.

The organic fillers and the inorganic fillers are preferably not in the form of a hollow particle. Specifically, these are preferably fibrous, particulate, or platy.

Although the content of other compounding agents in the resin mixture for 3D-printer modeling is not particularly limited as long as it is in the range not impairing the object of the present invention, the content is preferably 0 to 30 parts by weight, more preferably 0 to 10 parts by weight, still more preferably 0 to 5 parts by weight relative to 100 parts by weight of the total content of the matrix resin and the organic cross-linked hollow particle.

### [Method of producing resin mixture for 3D-printer modeling]

The resin mixture for 3D-printer modeling is obtained by mixing the matrix resin and the organic cross-linked hollow particle described above with the compounding agents optionally used. Specifically, preferably, the organic cross-linked hollow particle used in the present invention and the compounding agents optionally used are added to a melted matrix resin, and these are mixed by melt kneading. In this case, all the components may be individually fed to a melt kneader, or part of the components may be preparatively mixed, and then the components preparatively mixed and the remaining components may be individually fed to a melt kneader.

The matrix resin, the organic cross-linked hollow particle, and the compounding agents optionally used can be kneaded using a kneader, a roll mill, a Brabender, a single screw extruder, a twin screw extruder, a multi screw extruder, or the like, for example. Among these, melt kneading is performed preferably using an extruder such as a single screw extruder, a twin screw extruder, or a multi screw extruder, and is performed preferably using a twin screw extruder because a highly homogenous resin mixture for 3D-printer modeling is obtained with high production efficiency. When melt kneading is performed using an extruder, the cylinder temperature (temperature for twin-screw kneading) is preferably 150 to 220°C, more preferably 170 to 210°C, and the die temperature (temperature for extrusion molding) is preferably 160 to 220°C, more preferably 180 to 210°C.

### <3D-printer modeling material>

The present invention provides a 3D-printer modeling material comprising the above-mentioned resin mixture for 3D-printer modeling according to the present invention. The 3D-printer modeling material according to the present invention has excellent modeling properties, and allows production of a modeled body having sufficient strength with high reproductivity of a print model. In addition, the 3D-printer modeling material according to the present invention has an apparent density smaller than the density of the matrix resin and allows production of a lightweight modeled body.

The 3D-printer modeling material according to the present invention is obtained by molding the above-mentioned resin mixture for 3D-printer modeling according to the present invention into a shape applicable to a 3D-printer. Examples of the shape applicable to a 3D-printer include shapes of pellets, filaments, and the like. From the viewpoint of applicability to a general-purpose fused deposition modeling type 3D-printer, the 3D-printer modeling material according to the present invention may be filament-shaped.

The apparent density of the 3D-printer modeling material according to the present invention is preferably 0.4 times to 0.99 times, more preferably 0.45 times to 0.98 times, still more preferably 0.5 times to 0.95 times the density of the matrix resin constituting the 3D-printer modeling material according to the present invention. According to the present invention, the 3D-printer modeling material can have excellent modeling properties, and can have a reduced weight (namely, the apparent density of the 3D-printer modeling material is smaller than the density of the matrix resin), and as a result, a modeled body to be obtained can have a reduced weight. The apparent density of the 3D-printer modeling material can be measured by the same method as the method of measuring the apparent density of the organic cross-linked hollow particle.

### (Method of producing 3D-printer modeling material)

The 3D-printer modeling material according to the present invention can be obtained, for example, by molding the above-mentioned resin mixture for 3D-printer modeling according to the present invention into a desired shape by a known molding method such as extrusion molding, injection molding, press molding, or compression molding. Among these, extrusion molding is preferred because filament-shaped and pellet-shaped 3D-printer modeling materials applicable to a general-purpose 3D-printer can be produced with high production efficiency.

As described above, when the resin mixture for 3D-printer modeling is produced using an extruder such as a twin screw extruder, a pellet- or filament-shaped 3D-printer modeling material can be produced with high efficiency by extruding the resin mixture for 3D-printer modeling after kneading from the extruder and continuously molding the resin mixture into a pellet or filament shape. In this case, a suitable cylinder temperature and die temperature are as described above.

Pellets can be obtained by extruding the above-mentioned resin mixture for 3D-printer modeling according to the present invention, and directly cutting the extruded resin mixture to form pellets. On the other hand, pellets can also be obtained by extruding the above-mentioned resin mixture for 3D-printer modeling according to the present invention into a strand, cooling and then cutting the strand. Such pellets can be used, as it is, as a pellet-shaped 3D-printer modeling material. On the other hand, using pellets, a 3D-printer modeling material having a desired shape such as a filament shape may also be obtained.

A filament-shaped 3D-printer modeling material may be a monofilament or a multifilament. Preferred is a monofilament. The filament-shaped 3D-printer modeling material may be unstretched, or may be stretched. Although the diameter of the filament-shaped 3D-printer modeling material can be freely adjusted to be suitable for the 3D-printer to use, generally, the diameter is preferably 1.5 to 3.2 mm, more preferably 1.6 to 3.1 mm.

The filament-shaped 3D-printer modeling material can be produced, for example, by a method of extrusion molding the resin mixture for 3D-printer modeling into a filament, and then solidifying the filament by cooling. Solidification by cooling is performed in a liquid bath at usually 0 to 100°C, preferably 20 to 80°C.

After the resin mixture for 3D-printer modeling is extrusion molded into a filament, the extrusion molded product may be stretched before or after solidification by cooling. Examples of a stretching method include, but should not be limited to, a method of performing stretching with a stretch ratio of 2 to 5 times while performing a heat treatment at 170 to 250°C, and repeating such stretching as needed. After the stretching, preferably, a relaxing heat treatment (with a stretch ratio of 0.9 to 0.99 times) is performed while a heat treatment is being performed at 130 to 200°C.

The filament-shaped 3D-printer modeling material obtained as above is usually wound around a bobbin or the like, and then accommodated in a cartridge or the like.

### (Applications of 3D-printer modeling material)

The 3D-printer modeling material according to the present invention is used in 3D-printers having great freedom of design, and therefore, it is applicable to extremely broad applications. In particular, the 3D-printer modeling material according to the present invention has excellent modeling properties and can provide a lightweight modeled body. Thus, the 3D-printer modeling material according to the present invention is suitably used in applications where a modeled body having a complex three-dimensional structure needs to be obtained with sufficient strength and those where a weight reduction is required.

Examples of applications of the 3D-printer modeling material according to the present invention include, but should not be limited to, parts of mobile bodies such as airplanes, automobiles, trains, motorcycles, boats, bicycle, drones, satellites, and shuttles (such as space shuttles); parts of daily goods such as stationery, brushes, rings, jewelry goods, watches, cooking tools, kitchen goods, cleaning tools, home appliances, and toys; parts of things to wear, such as shoes, clothes, fasteners, buttons, snaps, gloves, leg guards, hats and caps, knee pads, elbow pads, helmets, and head gears; parts of devices to wear, such as prostheses, assist suits, and wearable devices; parts of sport goods such as rackets and grips; a variety of materials such as agricultural materials, gardening materials, fishing materials, and civil engineering and construction materials; electrical and electronic parts such as electronic circuit substrates and casings; industrial parts such as gears, motors, tools, propellers, impellers, wheels, housings for machines and apparatuses, gaskets, O-rings, pipes, connectors, and reflectors; medical parts for medical devices, stents, catheters, braces, and artificial organs; containers such as food product containers, mobile phone covers, and bottles; reduced-scale models of cars, houses, and buildings; thermal insulation materials; soundproof materials; damping materials; buffer materials; and the like.

Among these, parts of the mobile bodies such as drones often have complex three-dimensional geometries, and are often modeled with a 3D-printer. Here, in such parts of the mobile bodies such as drones, parts having a complex three-dimensional structure need to be obtained with sufficient strength, and in addition, a reduction in weights of the parts is highly demanded. For this reason, the 3D-printer modeling material according to the present invention is suitably used in applications to parts of the mobile bodies such as drones. More specifically, the 3D-printer modeling material according to the present invention can be suitably used in applications to a variety of parts, including parts such as bodies, propellers, arms, and feet of mobile bodies such as drones, and parts for protecting or supporting parts (e.g. motors, batteries, cameras, propellers, antennas, and the like) included in mobile bodies, such as covers, guard parts, reinforcing parts, supporting tools, and antivibration members.

### <Modeled body>

The modeled body according to the present invention can be obtained by 3D-printer modeling using the above-mentioned 3D-printer modeling material according to the present invention.

Since the modeled body according to the present invention is obtained using the 3D-printer modeling material according to the present invention, it has a three-dimensional shape of a print model with high reproductivity thereof, has sufficient strength, and is lightweight. The modeled body according to the present invention can be obtained by the modeling method according to the present invention described later.

### <Modeling method>

The present invention provides a modeling method of performing 3D-printer modeling using the above-mentioned 3D-printer modeling material according to the present invention. The above-mentioned modeled body according to the present invention is obtained by the modeling method according to the present invention.

Examples of methods for 3D-printer modeling include those such as fused deposition modeling (FDM), powder sintering, ink jetting, and stereolithography (SLA method). Among these, the 3D-printer modeling material according to the present invention can be suitably applied to the 3D-printer modeling by fused deposition modeling. Specifically, in the modeling method according to the present invention, the 3D-printer modeling by fused deposition modeling is preferably performed, and the modeled body according to the present invention is preferably obtained by the 3D-printer modeling by fused deposition modeling.

A case where fused deposition modeling is used will be described below, but the modeling method according to the present invention is not limited to such a case.

First, the 3D-printer modeling material according to the present invention is fed to a 3D-printer. When a filament (filament-shaped 3D-printer modeling material) is used, usually, the filament is engaged with a drive roll such as a nip roll or a gear roll, and is fed to an extrusion head while the filament is being pulled out.

The 3D-printer modeling material fed to the 3D-printer is melted by heating in the extrusion head, and is extruded from the distal end nozzle. The temperature of the extrusion head (nozzle temperature) is preferably 150 to 220°C, more preferably 170 to 210°C. The temperature of the 3D-printer modeling material ejected from the extrusion head is preferably 160 to 220°C, more preferably 180 to 210°C. The base temperature is preferably 80°C or lower. When the temperature of the 3D-printer modeling material ejected from the extrusion head falls within the above ranges, a lightweight modeled body can be modeled with high productivity and more excellent modeling properties. When the temperature falls within the above ranges, occurrence of defects such as thermal decomposition or burning of the resin, yellowing, smoking, an odor, stickiness, and a bad appearance is easily prevented.

The 3D-printer modeling material is ejected from the extrusion head in the form of a strand having a diameter of preferably 0.01 to 1.0 mm, more preferably 0.02 to 0.5 mm. The 3D-printer modeling material ejected in such a form is preferred because the reproductivity of a print model tends to be further improved.

The modeled body according to the present invention and the modeling method according to the present invention are suitably applicable to the applications described as those of the 3D-printer modeling material according to the present invention.

When in 3D-printer modeling performed by fused deposition modeling using the 3D-printer modeling material, a modeled body is produced by laminating a strand-shaped 3D-printer modeling material ejected from the extrusion head, insufficient adhesiveness may occur between the strand of the 3D-printer modeling material ejected first and the strand of the 3D-printer modeling material ejected thereon, resulting in a modeled body having insufficient strength. For example, use of a 3D-printer modeling material containing an inorganic component as the main component is likely to result in insufficient adhesiveness described above, thus resulting in a modeled body having insufficient strength.

In a 3D-printer modeling material comprising a mixture containing a matrix resin and a thermoplastic hollow particle, it is difficult to maintain the hollow shape derived from the hollow particle during production of the 3D-printer modeling material or 3D-printer modeling using the 3D-printer modeling material, thus tending to result in an insufficient effect of reducing the weight by the hollow particle.

In contrast, the 3D-printer modeling material comprising the resin mixture for 3D-printer modeling according to the present invention has favorable adhesiveness between laminated portions of the 3D-printer modeling material, and is likely to maintain the hollow shape derived from the hollow particle. For this reason, such a 3D-printer modeling material has excellent modeling properties, and can provide a lightweight modeled body. For this reason, the present invention can provide a lightweight modeled body with excellent modeling properties.

### EXAMPLES

Hereinafter, the present invention will be more specifically described by way of Examples and Comparative Examples, but the present invention is not limited to only these Examples. To be noted, parts and % are mass-based unless otherwise specified. A variety of measurements were performed by the methods described below.

### <Apparent density>

About 30 cm³ of a sample was added to a volumetric flask having a volume of 100 cm³, and the mass of the added sample was precisely weighed. Next, isopropanol was added up to the exact gauge line of the volumetric flask into which the sample was added, carefully to avoid inclusion of air bubbles. The mass of isopropanol added to the volumetric flask was precisely weighed, and the apparent density D₁ (g/cm³) of the sample was calculated based on Expression (II) below. For a larger amount of the sample, the apparent density was measured using another tool instead of the volumetric flask having a volume of 100 cm³. apparent density D1 (g/cm3) of sample = [mass of sample] ÷ (100 - [mass of isopropanol] ÷ [density of isopropanol at measurement temperature])

### <Modeling properties>

In Examples and Comparative Examples, modeling properties when 3D-printer modeling was performed using "3DBenchy" as a print model were evaluated according to the following criteria:
A: A modeled body having sufficient strength and having a good appearance is obtained with high reproductivity of the print model.
B: A modeled body having sufficient strength is obtained with high reproductivity of a print model, but stringiness accompanied by movement of the nozzle during the 3D-printer modeling is slightly observed.
C: A modeled body is broken into parts by slight stress during removal of the modeled body from the 3D-printer after the 3D-printer modeling or during measurement of the apparent density.

### <Bending test>

In Examples and Comparative Examples, a sample for a bending test was used, and a bending test was performed in accordance with the procedures (1) to (3) below.

### (1) Bending strength

In accordance with JIS K7171, a sample for a bending test was measured for bending strength (bending stress calculated based on the maximum load until the sample was broken).

### (2) Deformation amount

Using the same bending tester as that used in the measurement of the bending strength, a sample for a bending test was bent at a test rate of 2 mm/min. After the deflection of the sample for a bending test reached 4 mm (that is, after two minutes had passed from the start of bending), the sample was held with the deflection of 4 mm for 5 minutes. In the next step, the bending stress was released, and the deformation amount of the sample for a bending test after the unloading (the amount of deflection left in the sample for a bending test) was measured.

### (3) Evaluation of results of bending test

Based on the bending strength measured in (1) and the deformation amount measured in (2) described above, the results of the bending test were evaluated according to the following criteria:
A: The bending strength measured in (1) is 20 MPa or more and the deformation amount measured in (2) is less than 1 mm.
B: The bending strength measured in (1) is 5 MPa or more and less than 20 MPa and the deformation amount measured in (2) is less than 1 mm.
C: The bending strength measured in (1) is 5 MPa or more and less than 20 MPa and the deformation amount measured in (2) is 1 mm or more and less than 3 mm.
D: The bending strength measured in (1) is less than 5 MPa,
   the deformation amount measured in (2) is 3 mm or more, or
   the sample for a bending test is broken during measurement of the deformation amount (2) and the measurement of the deformation amount is impossible.

### [Production Example 1 (Production Example of organic cross-linked hollow particle 1)]

### (1) Mixed solution preparation step

Initially, the materials below were mixed to prepare an oil phase.
ethylene glycol dimethacrylate 31.85 parts (bifunctional heteroatom-containing cross-linkable monomer)
pentaerythritol tetraacrylate (tetrafunctional heteroatom-containing cross-linkable monomer) 9.1 parts
divinylbenzene (bifunctional cross-linkable hydrocarbon monomer) 4.37 parts
ethylvinylbenzene (monofunctional hydrocarbon monomer) 0.182 parts
2,2'-azobis(2,4-dimethylvaleronitrile) (oil-soluble polymerization initiator) 1.04 parts
hexane 54.5 parts

Next, in a stirring tank, under stirring, an aqueous solution of 16.5 parts of sodium hydroxide (alkali metal hydroxide) dissolved in 55 parts of deionized water was gradually added to an aqueous solution of 23.5 parts of magnesium chloride (water-soluble polyvalent metal salt) dissolved in 225 parts of deionized water to prepare a magnesium hydroxide colloid (poorly water-soluble metal hydroxides colloid) dispersion. Thus, an aqueous phase was obtained. The resulting aqueous phase was mixed with an oil phase to prepare a mixed solution.

### (2) Suspension step

In the next step, using the mixed solution obtained in the mixed solution preparation step described above, the mixed solution was suspended by stirring at a rotational speed of 4,000 rpm for one minute using a dispersing machine (available from PRIMIX Corporation, product name: Homomixer), thereby preparing a suspension in which monomer droplets encapsulating the hydrophobic organic solvent were dispersed in water.

### (3) Polymerization step

The suspension obtained in the suspension step above was heated to 65°C in a nitrogen atmosphere, and was stirred under a temperature condition at 65°C for 24 hours to cause a polymerization reaction. By this polymerization reaction, a precursor composition was obtained, which was a slurry solution in which precursor particles encapsulating the hydrophobic organic solvent were dispersed in water.

### (4) Washing step and solid liquid separation step

The precursor composition obtained in the polymerization step above was washed with diluted sulfuric acid (25°C, 10 minutes) to adjust the pH to 5.5 or less. In the next step, after water was separated by filtration, 200 parts of deionized water was newly added to prepare a slurry again. Then, a treatment of washing with water (washing, filtration, and dehydration) was repeatedly performed at room temperature (25°C) several times, followed by separation through filtration to obtain solid contents.

### (5) Drying step

The precursor particles obtained in the solid liquid separation step above were subjected to a heat treatment for 24 hours with a vacuum dryer under a vacuum condition at 200°C. Thereby, the water content and the encapsulated solvent were removed, obtaining an organic cross-linked hollow particle 1. The monomer composition of the shell polymer in the resulting organic cross-linked hollow particle 1 mostly corresponded to the composition of the polymerizable monomers fed to the polymerization. The resulting organic cross-linked hollow particle 1 had an apparent density of 0.4 g/cm³.

### [Production Example 2 (Production Example of organic cross-linked hollow particle 2)]

Initially, the materials below were mixed to prepare an oil phase.
ethylene glycol dimethacrylate 31.85 parts
pentaerythritol tetraacrylate (tetrafunctional heteroatom-containing cross-linkable monomer) 9.1 parts
divinylbenzene (bifunctional cross-linkable hydrocarbon monomer) 4.37 parts
ethylvinylbenzene (monofunctional hydrocarbon monomer) 0.182 parts
2,2'-azobis(2,4-dimethylvaleronitrile) (oil-soluble polymerization initiator) 1.04 parts
hexane 34.5 parts

An organic cross-linked hollow particle 2 was obtained in the same manner as in Production Example 1 except that the resulting oil phase was used. The monomer composition of the shell polymer in the resulting organic cross-linked hollow particle 2 mostly corresponded to the composition of the polymerizable monomers fed to the polymerization. The resulting organic cross-linked hollow particle 2 had an apparent density of 0.6 g/cm³.

The matrix resins and the hollow particles used in Examples and Comparative Examples are shown below.

### [Matrix resins]

PLA resin: polylactic acid, density: 1.25 g/cm³
ABS resin: acrylonitrile-butadiene-styrene resin, density: 1.07 g/cm³ [Hollow particles]
organic cross-linked hollow particle 1: hollow particle obtained in Production Example 1, apparent density: 0.4 g/cm³
organic cross-linked hollow particle 2: hollow particle obtained in Production Example 2, apparent density: 0.6 g/cm³
organic non-cross-linked hollow particle: a hollow particle including a shell formed from a styrene-acrylic copolymer (thermoplastic resin) and a hollow portion, trade name "TECHPOLYMER MBP-8", available from SEKISUI PLASTICS CO., Ltd., apparent density: 0.4 g/cm³
inorganic hollow particle: Shirasu balloon, trade name "WINLITE (registered trademark) SC-50", available from Shirafine Co., apparent density: 0.7 g/cm³

### [Example 1]

A PLA resin (polylactic acid, density: 1.25 g/cm³) was used as the matrix resin, and the organic cross-linked hollow particle 1 obtained in Production Example 1 was used as the hollow particle. The matrix resin and the hollow particle were fed to a twin screw kneading extruder in a ratio of 10 parts of the hollow particle relative to 90 parts of the matrix resin. These were subjected to twin screw kneading extrusion under a condition where the temperature for twin-screw kneading was 190°C and the temperature for extrusion molding was 200°C, thereby obtaining a filament (3D-printer modeling material). The apparent density of the resulting filament was measured in accordance with the above-mentioned measurement method. The results are shown in Table 1.

Using the resulting filament, 3D-printer modeling was performed under the following conditions, obtaining a modeled body having a 3DBenchy shape. The appearance of the obtained modeled body is shown in Fig. 1. The apparent density of the obtained modeled body was subjected to the bending test in accordance with the above-mentioned method. The results are shown in Table 1.
· 3D-printer: a fused deposition modeling 3D-printer (trade name "da Vinci 1.0 Pro", available from XYZprinting, Japan)
· nozzle temperature: 200°C
· print model: 3DBenchy (standard model for a test of modeling properties of the 3D-printer)

A sample for a bending test was obtained under the same conditions above except that the print model was replaced by a model for the sample for a bending test (80 mm × 10 mm × 4 mm in height). The obtained sample for a bending test was subjected to the bending test in accordance with the above-mentioned measurement method. The results are shown in Table 1.

### [Examples 2 to 9 and Comparative Examples 1 to 2]

Filaments (3D-printer modeling materials) were obtained in the same manner as in Example 1 except that the types of the matrix resin and the hollow particle and the compounding ratio thereof were changed as shown in Table 1. Modeled bodies having a 3DBenchy shape and samples for a bending test were obtained in the same manner as in Example 1 except that the resulting filaments were used. The resulting filaments, modeled bodies, and samples for a bending test were used to perform the measurements and the tests as in Example 1. The results are shown in Table 1.

The modeled body (print model: 3DBenchy) produced in Comparative Example 2 was broken into parts by slight stress during removal of the modeled body from the 3D-printer after the 3D-printer modeling or during the measurement of the apparent density, and therefore, the apparent density was not measured.

### [Table 1]

**Table 1**

| | | Example 1 | Example 2 | Example 3 | Example 4 | Example 5 | Example 6 | Example 7 | Example 8 | Example 9 | Comp. Ex. 1 | Comp. Ex. 2 |
|---|---|---|---|---|---|---|---|---|---|---|---|---|
| | Resin mixture for 3D-printer modeling | | | | | | | | | | | |
| | Type | PLA | PLA | PLA | PLA | PLA | ABS | ABS | ABS | ABS | PLA | PLA |
| Matrix resin | Density (g/cm³) | 1.25 | 1.25 | 1.25 | 1.25 | 1.25 | 1.07 | 1.07 | 1.07 | 1.07 | 1.25 | 1.25 |
| | Compounding ratio (wt%) | 90 | 70 | 50 | 90 | 70 | 90 | 70 | 90 | 70 | 90 | 90 |
| | Type | Organic cross-linked hollow particle 1 | Organic cross-linked hollow particle 1 | Organic cross-linked hollow particle 1 | Organic cross-linked hollow particle 2 | Organic cross-linked hollow particle 2 | Organic cross-linked hollow particle 1 | Organic cross-linked hollow particle 1 | Organic cross-linked hollow particle 2 | Organic cross-linked hollow particle 2 | Organic non-cross-linked hollow particle | Inorganic hollow particle |
| Hollow particle | Apparent density (g/cm³) | 0.4 | 0.4 | 0.4 | 0.6 | 0.6 | 0.4 | 0.4 | 0.6 | 0.6 | 0.4 | 0.7 |
| | Compounding ratio (wt%) | 10 | 30 | 50 | 10 | 30 | 10 | 30 | 10 | 30 | 10 | 10 |
| Material for 3D-printer modeling | | | | | | | | | | | | |
| Filament | Apparent density (g/cm³) | 10.3 | 0.76 | 0.63 | 1.13 | 0.94 | 0.92 | 0.71 | 0.99 | 0.87 | 1.23 | 1.16 |
| Evaluations of modeling properties and modeled body | | | | | | | | | | | | |
| 3D Benchy | Modeling properties | A | A | B | A | A | A | A | A | A | A | C |
| | Apparent density (g/cm³) | 1.04 | 0.77 | 0.64 | 1.17 | 0.98 | 0.94 | 0.73 | 1.02 | 0.9 | 1.23 | Not measurable |
| Sample for bending test | Bending test | A | B | C | A | A | B | B | A | B | A | D |

Table 1 clearly shows that the resin mixtures for 3D-printer modeling each comprising a matrix resin and an organic cross-linked hollow particle had excellent modeling properties and provided 3D-printer modeling materials which allowed production of lightweight modeled bodies (Examples 1 to 9).

In contrast, a lightweight modeled body was not obtained when the organic non-cross-linked hollow particle was used as the hollow particle (Comparative Example 1).

A 3D-printer modeling material having poor modeling properties was obtained when the inorganic hollow particle was used as the hollow particle (Comparative Example 2).

## Claims

1. A resin mixture for 3D-printer modeling, comprising a matrix resin and an organic cross-linked hollow particle.

2. The resin mixture for 3D-printer modeling according to claim 1, wherein the organic cross-linked hollow particle has an apparent density of 0.2 to 0.9 g/cm³.

3. The resin mixture for 3D-printer modeling according to claim 1 or 2, wherein the content of the organic cross-linked hollow particle is 1 to 70 parts by weight relative to 100 parts by weight of the total content of the matrix resin and the organic cross-linked hollow particle.

4. The resin mixture for 3D-printer modeling according to any one of claims 1 to 3, wherein the organic cross-linked hollow particle includes a shell formed from a shell polymer containing a cross-linkable monomer unit.

5. The resin mixture for 3D-printer modeling according to any one of claims 1 to 4, wherein the shell polymer contains a heteroatom-containing cross-linkable monomer unit as the cross-linkable monomer unit.

6. A 3D-printer modeling material comprising the resin mixture for 3D-printer modeling according to any one of claims 1 to 5.

7. The 3D-printer modeling material according to claim 6 used in 3D-printer modeling by fused deposition modeling.

8. The 3D-printer modeling material according to claim 6 or 7, wherein the 3D-printer modeling material is filament-shaped.

9. A modeled body obtained by 3D-printer modeling using the 3D-printer modeling material according to any one of claims 6 to 8.

10. The modeled body according to claim 9 obtained by 3D-printer modeling by fused deposition modeling.

11. A modeling method comprising performing 3D-printer modeling using the 3D-printer modeling material according to any one of claims 6 to 8.

12. The modeling method according to claim 11 comprising performing 3D-printer modeling by fused deposition modeling.
